# EUROPEAN PATENT APPLICATION

(11) **EP 4 738 670 A1**
(43) Date of publication of application: **06.05.2026**
(21) Application number: 25162570.3
(22) Date of filing: 10.03.2025
(51) Int. Cl.: H02K 33/16

(54) **LINEAR ACTUATOR AND HAIR CUTTING DEVICE**

(30) Priority: 31.10.2024 CN 202411540211
(71) Applicant: Raymond (Panyu Nansha) Electrical Appliances Development Co., Ltd., Guangzhou, Guangdong 511458 (CN); Technelec Ltd., Oakham, Rutland LE15 6RB (GB)
(72) Inventor: Wong, Ying Man John, Guangzhou, Guangdong 511458 (CN); Wong, Yin Wai, Guangzhou, Guangdong 511458 (CN); Pollock, Charles, Oakham, Rutland LE15 6RB (GB); Pollock, Helen, Oakham, Rutland LE15 6RB (GB); Dorton, Tom, Oakham, Rutland LE15 6RB (GB)
(74) Representative: Herrero & Asociados, S.L.

(57) **Abstract**

The invention relates to the field of linear motor technologies, and specifically provides a linear actuator. The linear actuator includes: at least one electromagnet (100) arranged horizontally and magnet groups (300) disposed at two sides of the electromagnet separately. Each electromagnet includes two magnetic poles, and the two magnetic poles are arranged at two ends of the electromagnet along an axial direction thereof. Each magnet group is opposite to the magnetic poles on sides of the electromagnet correspondingly, each magnet group includes at least two magnets (320), a side of a part of the magnets facing the electromagnet is S pole, and a side of another part of the magnets facing the electromagnet is N pole. After energizing the electromagnet, the magnet groups are driven to reciprocate along a direction perpendicular to a central axis of the electromagnet through magnetic induction action between the electromagnet and the magnet groups. A volume of the linear actuator can be reduced by the above structure.

## Description

### TECHNICAL FIELD

The invention relates to the field of linear motor technologies, and more particularly to a linear actuator and a hair cutting device equipped with the linear actuator.

### BACKGROUND

A linear actuator is a device used to control linear displacement or force. The linear actuator generates a magnetic field through the principle of electromagnetic induction and uses the magnetic field to apply force or motion to a load, thereby achieving linear control of the load. The linear actuator in the related art includes a stator assembly and a mover assembly. The mover assembly drives the load to perform linear reciprocating motion through the magnetic induction action between the stator assembly and the mover assembly. Specifically, in the stator assembly, a core of an electromagnet usually adopts an E-shaped core with coils set on a middle arm of the E-shaped core. By energizing the linear actuator, the E-shaped core becomes electrified and magnetized. The magnetized E-shaped core has magnetism and can produce repulsive or attractive forces with the magnet in the mover assembly, causing the load connected to the mover assembly to perform linear reciprocating motion. To ensure that the load moves smoothly in the linear reciprocating motion, it is necessary to ensure that the core in the stator assembly and the magnet in the mover assembly continuously alternate between attraction and repulsion. When it is necessary to drive two loads in opposite directions at the same time, two magnets are required to be independently set, and the electromagnet drives both the two magnets to move linearly, with the motion directions of the two magnets being opposite. However, it is not suitable to use two electromagnets to independently drive the magnets, due to a large size of the E-shaped core itself. If only one E-shaped core is used to make the electromagnet, it must be considered whether the magnetic flux generated by the electromagnet can pass through the two magnets at the same time to ensure that the two magnets continue to move in a linear reciprocating motion. Therefore, in the industry, under the premise of avoiding the use of two E-shaped cores, the size of the E-shaped core relative to the magnet is appropriately increased to ensure that the two magnets can be driven smoothly in reciprocating motion while appropriately reducing the volume. However, for this field, this still cannot effectively reduce the volume of the linear actuator, causing the equipment or device using the linear actuator to need to provide a larger installation space, which in turn increases the volume and size of the equipment or device using the linear actuator.

### SUMMARY

The invention aims at solving technical problems in the related art and provides a linear actuator and a hair cutting device provided with the linear actuator.

In order to solve above problems, the invention provides the following technical solutions.

The linear actuator includes at least one electromagnet arranged horizontally, each electromagnet includes two magnetic poles, and the two magnetic poles are arranged at two ends of the electromagnet along an axial direction of the electromagnet. Magnet groups are disposed at two sides of the at least one electromagnet separately. Each magnet group is opposite to a corresponding magnetic pole of the at least one electromagnet, each magnet group includes at least two magnets, a side of a part of the at least two magnets facing the at least one electromagnet is S pole, and a side of another part of the at least two magnets facing the at least one electromagnet is N pole. After energizing the at least one electromagnet, the magnet groups are driven to reciprocate along a direction perpendicular to a central axis of the at least one electromagnet through magnetic induction action between the at least one electromagnet and the magnet groups.

In the linear actuator of the invention, the at least one electromagnet is arranged horizontally, with the two magnetic poles of the electromagnet along the axial direction of the electromagnet at the two ends of the electromagnet, and each magnetic pole of the at least one electromagnet is provided with a corresponding magnet group. When the at least one electromagnet is powered by alternating current, the magnetic induction action between the at least one electromagnet and the magnet groups can be utilized to cause the magnet groups to reciprocate along a direction perpendicular to the axis of the electromagnet. By arranging the at least one electromagnet horizontally and arranging the magnet groups at the sides of the at least one electromagnet opposite to the magnetic poles of the at least one electromagnet, making the at least one electromagnet disposed between two sets of the magnet groups, the magnetic fields generated at the two ends of the at least one electromagnet can respectively drive the magnet groups. This arrangement fully utilizes the magnetic poles of the at least one electromagnet to ensure smooth and continuous reciprocating motion of the magnet groups, thereby eliminating the need to increase the number of the at least one electromagnet or enlarge the size of the at least one electromagnet to ensure the motion of the magnet groups, significantly reducing the volume of the linear actuator.

In an embodiment, a number of the at least two magnets of each magnet group is one more than a number of the at least one electromagnet.

In an embodiment, the number of the at least one electromagnet is two, the two electromagnets are juxtaposed with each other, after electrified, polarities of magnetic poles at same ends of the two electromagnets are opposite, the number of the at least two magnets is three, and polarities of the three magnets facing the two electromagnets alternate between S pole and N pole; or
the number of the at least one electromagnet is two, the two electromagnets are juxtaposed with each other, after electrified, polarities of magnetic poles at same ends of the two electromagnets are same, the number of the at least two magnets is three, and polarities of the three magnets facing the two electromagnets are arranged in units of S-pole-S-pole-N-pole, N-pole-S-pole-S-pole, S-pole-N-pole-N-pole, or N-pole-N-pole-S-pole.

In an embodiment, vertical lines perpendicular to surface centers of the at least two magnets and the central axis of the at least one electromagnet are arranged in a staggered manner, and the central axis of the at least one electromagnet is located between the vertical lines perpendicular to the surface centers of adjacent two of the at least two magnets.

In an embodiment, a magnetic pole arrangement on the side of the at least two magnets in a magnet group facing the at least one electromagnet is same as a magnetic pole arrangement on the side of the at least two magnets in another magnet group facing the at least one electromagnet; or
a magnetic pole arrangement on the side of the at least two magnets in a magnet group facing the at least one electromagnet is opposite to a magnetic pole arrangement on the side of the at least two magnets in another magnet group facing the at least one electromagnet.

In an embodiment, the at least one electromagnet includes a metal core and an insulator wrapped around the metal core, with a coil wound around the insulator, the metal core includes multiple metal sheets, and the metal sheets are stacked to form the metal core.

In an embodiment, the linear actuator further includes an installation frame. The installation frame includes an electromagnet installation part and magnet group installation parts disposed on two sides of the electromagnet installation part, the at least one electromagnet is horizontally disposed in the electromagnet installation part, the magnet groups are respectively disposed in the magnet group installation parts, and after the magnet groups are installed in the magnet group installation parts, each magnet group is opposite to the corresponding magnetic pole of the at least one electromagnet installed in the electromagnet installation part.

In an embodiment, the magnet group installation parts are elastically connected to the electromagnet installation part via elastic connection parts, and the elastic connection parts are integrally formed with the electromagnet installation part into one whole or detachably connected to the electromagnet installation part via fasteners; or
the magnet group installation parts are connected to actuating arms respectively, the actuating arms are provided with output shafts, the output shafts are disposed on the installation frame, and free ends of two actuating arms are arranged in a staggered manner or in an opposite manner.

In an embodiment, two sides of the electromagnet installation part are provided with connecting walls respectively, the connecting walls are respectively provided with first extension parts, two sides of each magnet group installation part are provided with second extension parts respectively, a first extension part and a second extension part on a same side as the first extension part extend in a same direction, and the first extension part and the second extension part on the same side as the first extension part are connected via the elastic connection parts; and
each elastic connection part includes two first elastic support parts and a second elastic support part, the second elastic support part is disposed between the two first elastic support parts, and a thickness of the second elastic support part is greater than a thickness of each first elastic support parts at two sides of the second elastic support part.

The invention provides a hair cutting device including: a housing and movable blade assemblies. An inside of the housing is provided with the linear actuator described above, the movable blade assemblies are connected to the magnet groups, and the movable blade assemblies reciprocate with the magnet groups under power provided by the magnet groups of the linear actuator.

The hair cutting device described in the invention, due to the linear actuator, possesses all the beneficial technical effects brought by the linear actuator, which are not repeated here. Additionally, since the hair cutting device employs the linear actuator with a small size, a size of the hair cutting device can also be reduced, making it more portable and easier to store.

### BRIEF DESCRIPTION OF DRAWINGS

Through preferred embodiments of the invention shown in the accompanying drawings, the above and other purposes, features, and advantages of the invention will become clearer. Same reference numerals in all the accompanying drawings indicate the same parts, and the accompanying drawings are not intentionally scaled proportionally according to actual dimensions. The focus is on illustrating the essence of the invention.
FIG. 1 illustrates a perspective view of a linear actuator according to a first implementation of the invention.
FIG. 2 illustrates an exploded view of the linear actuator illustrated in the FIG. 1.
FIG. 3 illustrates a schematic structural diagram of two electromagnets of the linear actuator according to the embodiment of the invention.
FIG. 4 illustrates a schematic diagram of a magnet group of the linear actuator according to the embodiment of the invention.
FIG. 5 illustrates a schematic diagram of a reciprocating linear motion of the magnet group relative to the electromagnets in an embodiment 1.
FIG. 6 illustrates a schematic diagram of a reciprocating linear motion of the magnet group relative to the electromagnets in an embodiment 2.
FIG. 7 illustrates a top view of the linear actuator, where a fixing plate and actuating arms are removed.
FIG. 8 illustrates a schematic diagram of moving directions of two magnet groups in the embodiment 1.
FIG. 9 illustrates a schematic diagram of moving directions of two magnet groups in the embodiment 2.
FIG. 10 illustrates a schematic structural diagram of an installation frame of the linear actuator according to the embodiment of the invention.
FIG. 11 illustrates a schematic structural diagram of an actuating arm of the linear actuator according to the embodiment of the invention.
FIG. 12 illustrates an exploded view of the linear actuator according to a second implementation of the invention.
FIG. 13 illustrates an exploded view of the linear actuator according to a third implementation of the invention.
FIG. 14 illustrates a schematic diagram of the linear actuator according to the third implementation of the invention.

### DETAILED DESCRIPTION OF EMBODIMENTS

For the convenience of understanding the invention, a more comprehensive description is provided below with reference to the accompanying drawings.

It should be noted that when a component is considered to be "connected" to another component, the component can be directly connected to and integrated with the another component, or there may be a middle component present at the same time. Terms "installation", "one end", "another end", and similar expressions used herein are for illustrative purposes only.

Unless otherwise defined, all technical and scientific terms used herein have the same meanings as understood by those skilled in the art. Terms used in this specification are only for the purpose of describing specific embodiments and are not intended to limit the invention. The term "and/or" as used herein includes any and all combinations of one or more related listed items.

In the invention, unless otherwise specified and limited, a first feature being "on" or "under" a second feature may be a direct contact between the first and second features, or an indirect contact between the first and second features through an intermediate medium. Moreover, the first feature being "on", "over" or "above" the second feature may indicate that the first feature is directly above or diagonally above the second feature, or simply indicate that the first feature is horizontally higher than the second feature. The first feature being "under", "underneath" or "below" the second feature may indicate that the first feature is directly under or diagonally under the second feature, or simply indicate that the first feature is horizontally lower than the second feature.

In the description of this specification, reference terms such as "preferred embodiments", "another embodiment", "other embodiments", or "specific examples" mean that the specific features, structures, materials, or characteristics described in conjunction with the embodiment or example are included in at least one embodiment or example of the invention. In the specification, the illustrative expressions of the above terms do not necessarily refer to the same embodiments or examples. Moreover, the specific features, structures, materials, or characteristics described can be combined in any one or more embodiments or examples in an appropriate manner. In addition, those skilled in the art can combine different embodiments or examples described in this specification, as well as the features of different embodiments or examples, without conflicting with each other.

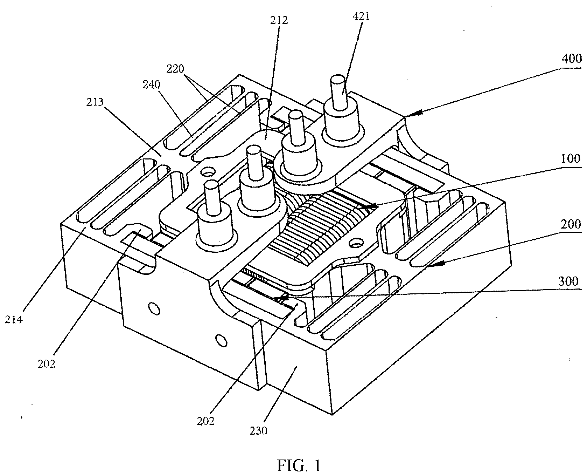

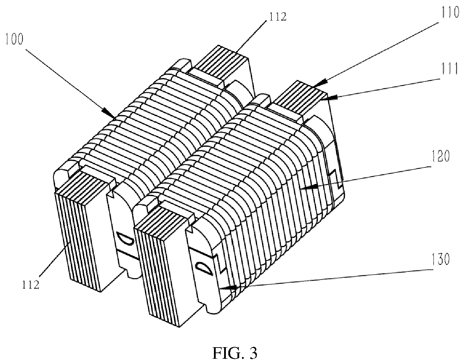

The invention provides a specific implementation of a linear actuator, as shown in FIG. 1 to FIG. 3 and FIG. 12 to FIG. 14, the linear actuator includes at least one electromagnet 100 disposed horizontally. A number of the at least one electromagnet 100 can be one or more. In this embodiment, the number of the at least one electromagnet 100 is two, the two electromagnets 100 may produce two magnetic field combinations, increasing the stability of the reciprocating motion of magnet groups 300 and increasing the magnetic force, while also saving costs. Each electromagnet 100 includes a metal core 110 and an insulator 130 wrapped around the metal core 110. The insulator 130 can be an insulated winding box or an insulated tape, etc. A coil 120 is wound around the insulator 130. The metal core 110 includes multiple metal sheets 111, and the multiple metal sheets 111 are stacked to form the metal core 110. The metal core 110 includes at least five metal sheets 111, with a thickness of each metal sheet 111 being within 0.5 millimeters (mm) (including 0.5 mm). Each metal sheet 111 can be I-shaped, thus forming a compact structure of the metal core 110 and reducing its size. When a required thickness of the metal core 110 is to be achieved, it is necessary to assemble the multiple metal sheets 111 together to achieve the overall thickness of the metal core 110. For example, when the overall thickness of the metal core 110 is required to be 3 mm, if the metal sheets 111 of 0.3 mm are used, ten metal sheets 111 are needed, and if the metal sheets 111 of 0.5 mm are used, six metal sheets 111 are needed. Additionally, setting the thickness of the metal sheets 111 to within 0.5 mm (including 0.5mm) ensures that eddy currents are not generated within the metal sheets 111 when magnetized, saving energy and significantly reducing heat generation, without affecting the performance and energy efficiency of the linear actuator. When the insulator 130 is an insulated winding box made of a high polymer material, a thickness of the insulated winding box does not exceed 1 mm (including 1 mm). If the insulated winding box is too thick, it will affect the magnetic conduction effect and occupy space.

In the embodiment, referring to FIG. 1, FIG. 2, and FIG. 4, each electromagnet 100 includes two magnetic poles 112, and the two magnetic poles 112 are arranged at two ends of each electromagnet 100 along an axial direction thereof. The axial direction refers to a central axis B in a lengthwise direction of the metal core 110 formed by stacking the metal sheets 111 which are I-shaped. Two ends of the electromagnet 100 are provided with magnet groups 300, with each magnet group 300 disposed opposite to the magnetic pole 112 at a corresponding side of the electromagnet 100. This structure can drive at least two components that need to perform linear motion to reciprocate in a same or opposite direction. Each magnet group 300 includes at least two magnets 320, i.e., the magnets 320 can be two or more, and each magnet group 300 further includes a magnetic conductor 310, with the magnets 320 arranged along a lengthwise direction of the magnetic conductor 310 on a surface of the magnetic conductor 310. A side of a part of the magnets 320 facing the electromagnets 100 is S pole, while a side of another part of the magnets 320 facing the electromagnets 100 is N pole. Within the same magnet group 300, since the part of the magnets 320 has the S pole facing the electromagnets 100 and another part of the magnets 320 has the N pole facing the electromagnets 100, when the electromagnets 100 are electrified, the magnetic induction action between the electromagnets 100 and the magnet groups 300 causes the magnet groups 300 to reciprocate along a direction perpendicular to the central axes B of the electromagnets 100.

In the linear actuator of the embodiment, by arranging the electromagnets 100 horizontally, the two magnetic poles 112 of each electromagnet 100 are disposed at opposite ends of each electromagnet 100 along the central axis B, with the corresponding magnet group 300 disposed at each magnetic pole 112. When the electromagnets 100 are powered by alternating current, the magnetic induction action between the electromagnets 100 and the magnet groups 300 can be utilized to cause the magnet groups 300 to reciprocate along the direction perpendicular to the central axes B of the electromagnets 100. By arranging the electromagnets 100 horizontally and arranging the magnet groups 300 at the sides of the electromagnets 100 opposite to the magnetic poles 112 of the electromagnets 100, with the electromagnets 100 being disposed between the two magnet groups 300, the magnetic fields produced at the two ends of the electromagnets 100 can respectively drive the magnet groups 300. This arrangement fully utilizes the magnetic poles 112 of the electromagnets 100 to ensure smooth and continuous reciprocating motion of the magnet groups 300. Consequently, there is no need to increase the number of the electromagnets 100 or enlarge the size of the electromagnets 100 to ensure the motion of the magnet groups 300, significantly reducing the volume of the linear actuator.

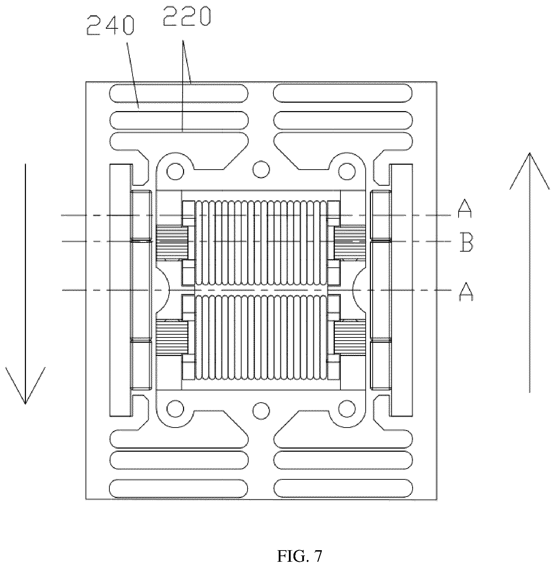

In a preferred embodiment, as shown in FIG. 7, the number of the magnets 320 of each magnet group 300 is one more than the number of the electromagnets 100. Vertical lines A perpendicular to surface centers of the magnets 320 and the central axes B of the electromagnets 100 are arranged in a staggered manner. The central axis B of each electromagnet 100 is located between the vertical lines A perpendicular to the surface centers of adjacent two magnets 320. It is particularly preferred that the central axis B of each electromagnet 100 coincides with a junction of the adjacent two magnets 320, ensuring that the magnetic flux (at least half of the magnetic flux) produced by each electromagnet 100 passes through at least two magnets 320 on the same side, further ensuring the smooth reciprocating linear motion of the magnet groups 300.

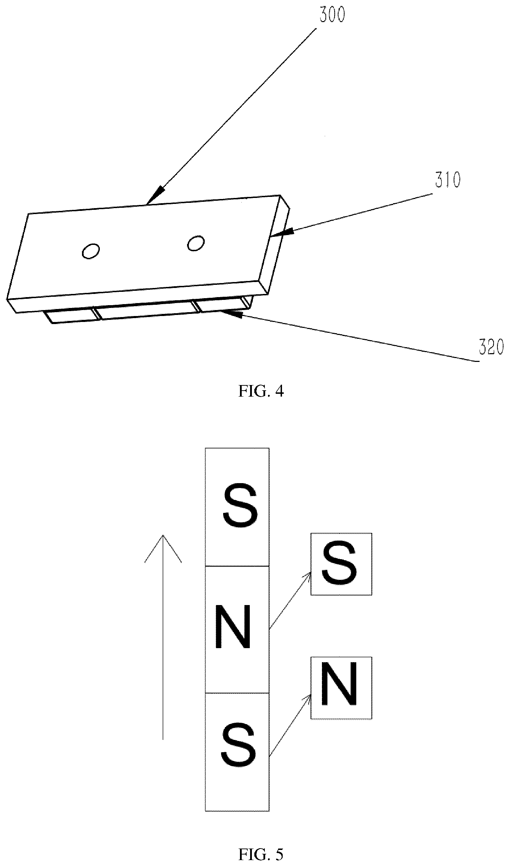

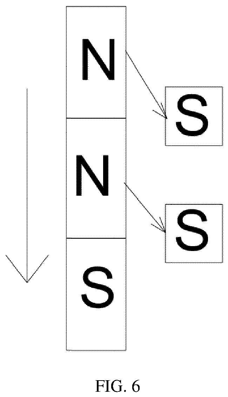

In a preferred embodiment, there are two electromagnets 100 are juxtaposed with each other. When electrified, polarities of the magnetic poles 112 at a same end of the electromagnets 100 are opposite. Each magnet group 300 has three magnets 320, and the polarities of all the magnets 320 facing the electromagnets 100 alternate between S and N poles. For example, when there are two electromagnets 100, after powered by alternating current, on a same end, one of the two electromagnets 100 has a magnetic pole 112 of the N pole, and another of the two electromagnets 100 has a magnetic pole 112 of the S pole. The magnetic poles 112 at the same end of the two electromagnets 100 have opposite polarities, which can be achieved by winding the coils 120 in opposite directions. Thus, when the two electromagnets 100 are connected in series, the current passing through the coils 120 is in opposite directions, thereby making the polarities of the magnetic poles 112 at the same end of the two electromagnets 100 opposite. It can also be achieved by connecting the two electromagnets 100 in parallel with opposite positive and negative connections, thus making the current in opposite directions in the coils 120, thereby making the polarities of the magnetic poles 112 at the same end of the two electromagnets 100 opposite. However, this parallel structure requires separate controls to the two electromagnets 100, increasing the complexity of the control circuit and raising the manufacturing cost of the linear actuator. The magnet group 300 has three magnets 320, and the polarities of the three magnets 320 facing the electromagnets 100 can be S-N-S or N-S-N. As shown in FIG. 5, FIG. 5 illustrates the action of the magnet group 300 reciprocating relative to the electromagnets 100 in this embodiment, with the magnet group 300 moving upwards in a direction of an arrow. Alternatively, in another embodiment, there are two electromagnets 100 are juxtaposed with each other. When electrified, the magnetic poles 112 at the same end of the electromagnets 100 have the same polarity. The magnet group 300 has three magnets 320, and the polarities of the magnets 320 facing the electromagnets 100 are arranged in units of S-S-N, N-S-S, S-N-N, or N-N-S. For example, when there are two electromagnets 100, after passing alternating current, the magnetic poles 112 at the same end of the two electromagnets 100 are N poles; at this time, the magnet group 300 has three magnets 320, and the polarities of the three magnets 320 facing the electromagnets 100 can be S-S-N, N-S-S, S-N-N, or N-N-S. As shown in FIG. 6, FIG. 6 illustrates the action of the magnet group 300 reciprocating relative to the electromagnets 100 in this embodiment, with the magnet group 300 moving downwards in a direction of an arrow. Through the above structure, the reciprocating linear motion of the magnet groups 300 can be ensured smoothly.

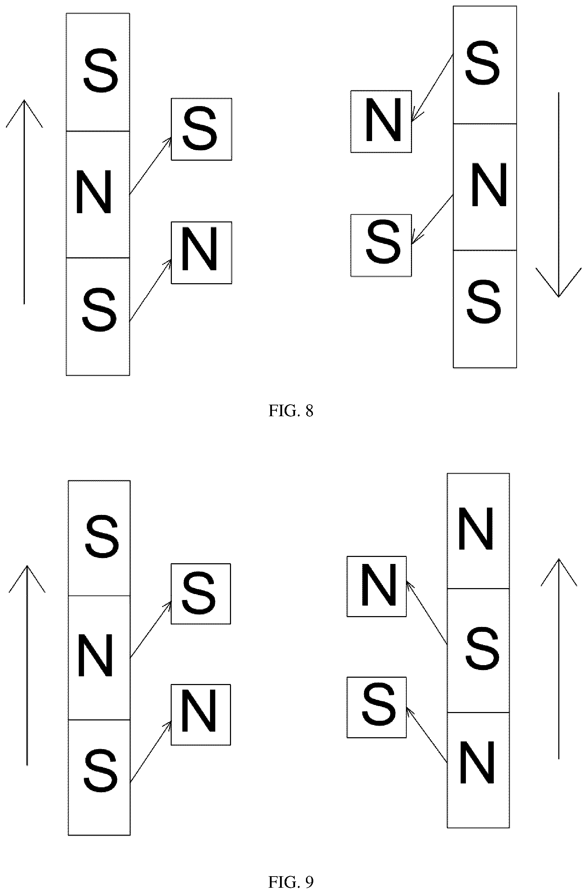

In a preferred embodiment, a magnetic pole arrangement on the side of the magnets 320 of a magnet group 300 facing the electromagnets 100 is same as that on the side of the magnets 320 of another magnet group 300 facing the electromagnets 100. For example, each magnet group 300 has three magnets 320, and the magnetic pole arrangement on the side of the magnets 320 of a magnet group 300 facing the electromagnets 100 is S-N-S, and the magnetic pole arrangement on the side of the magnets 320 of another magnet group 300 facing the electromagnets 100 is also S-N-S, as shown in FIG. 8. FIG. 8 shows a schematic diagram of moving directions of the two magnet groups 300, at this condition, the moving directions of the two magnet groups 300 are opposite. By making the moving directions of the two magnet groups 300 opposite, the amplitude can be reduced, vibrations can be minimized, and noise can be lowered. Alternatively, in another embodiment, the magnetic pole arrangement on the side of the magnets 320 of a magnet group 300 facing the electromagnets 100 is opposite to that on the side of the magnets 320 of another magnet group 300 facing the electromagnets 100. For example, each magnet group 300 has three magnets 320, and the magnetic pole arrangement on the side of the magnets 320 of a magnet group 300 facing the electromagnets 100 is S-N-S, and the magnetic pole arrangement on the side of the magnets 320 of another magnet group 300 facing the electromagnets 100 is N-S-N, as shown in FIG. 9. FIG. 9 shows a schematic diagram of the moving directions of the two magnet groups 300, at this condition, the moving directions of the two magnet groups 300 are same.

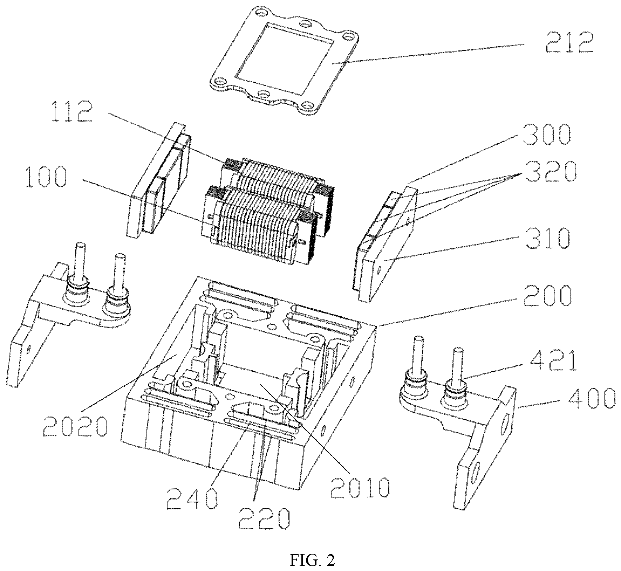

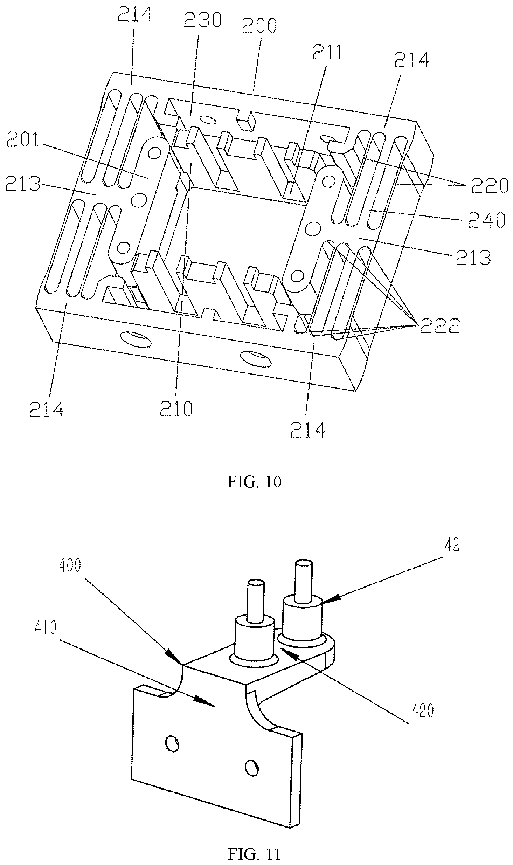

In a preferred embodiment, the linear actuator further includes an installation frame 200, which has multiple implementations. The invention provides three specific implementations. In the first implementation, as shown in FIG. 1, FIG. 2, FIG. 7 and FIG. 10, the installation frame 200 includes an electromagnet installation part 2010 and magnet group installation parts 2020 disposed on two sides of the electromagnet installation part 2010. The electromagnets 100 are horizontally disposed in the electromagnet installation part 2010, and the magnet groups 300 are respectively disposed in the magnet group installation parts 2020. After the magnet groups 300 are installed in the magnet group installation parts 2020, each magnet group 300 is opposite to the corresponding magnetic pole 112 of the electromagnets 100. Specifically, the magnet group installation parts 2020 are elastically connected to the electromagnet installation part 2010 via elastic connection parts, and the electromagnet installation part 2010 is connected to the elastic connection parts via connecting walls 201. The electromagnet installation part 2010, the elastic connection parts and the magnet group installation parts 2020 are integrally molded, simplifying the production process and reducing assembly errors. The connecting walls 201 are disposed on two sides of the electromagnet installation part 2010, and the connecting walls 201 are provided with first extension parts 213. Two sides of each magnet group installation part 2020 are provided with second extension parts 214 respectively. A first extension part 213 and a second extension part 214 on a same side as the first extension part 213 extend in a same direction and are connected by the elastic connection parts. Specifically, each magnet group installation part 2020 includes a side wall 230 and a pair of retaining pieces 202 extending towards the electromagnet installation part 2010 on a side of the side wall 230. The two retaining pieces 202 are spaced apart to define an installation space for the magnet group 300. The second extension parts 214 are disposed at two ends of the side walls 230 and are formed by outward extension from the two ends of the side walls 230. The retaining pieces 202 prevent the magnet groups 300 from detaching from the magnet group installation parts 2020 during reciprocating motion. The electromagnet installation part 2010 includes a supporting base and supporting walls 210 which are spaced apart symmetrically on the supporting base. Each supporting wall 210 defines two grooves 211 spaced apart at an end surface of each supporting wall 210, with the grooves 211 on the two supporting walls 210 corresponding to each other. When the two electromagnets 100 are installed in the electromagnet installation part 2010, ends of the metal cores 110 are supported in the corresponding grooves 211. The electromagnets 100 are pressed and secured in the electromagnet installation part 2010 by an electromagnet fixing plate 212. Since the electromagnet installation part 2010 is fixed and immovable, and the magnet group installation parts 2020 reciprocate with the magnet groups 300, the elastic connection parts play a role in cushioning and elastic resetting. The electromagnet installation part 2010, the magnet group installation parts 2020, the elastic connection parts, the connecting walls 201, and the extension parts can be assembled to form the installation frame 200 or directly formed by an integral molding process to form the installation frame 200. In this embodiment, an integral molding method is used. The installation frame 200 is made of plastic, which is beneficial for the deformation and recovery of the elastic connection parts. In this embodiment, as shown in FIG. 10, each elastic connection part includes at least one first elastic support part 220, and two first elastic support parts 220 are provided in this embodiment. Each elastic connection part further includes a second elastic support part 240 disposed between the two first elastic support parts 220, with a thickness of the second elastic support part 240 greater than a thickness of each first elastic support part 220. The second elastic support part 240 stores more elastic potential energy to help the magnet groups 300 return to their original positions. Moreover, placing a thicker second elastic support part 240 between two thinner first elastic support parts 220 ensures more uniform deformation during movement, preventing any first elastic support part 220 from breaking prematurely due to greater deformation compared to other first elastic support parts 220. Additionally, ends of the first elastic support parts 220 are connected to the first extension parts 213, and other ends of the first elastic support parts 220 are connected to the second extension parts 214. Ends of the second elastic support parts 240 are connected to the first extension parts 213, and other ends of the second elastic support parts 240 are connected to the second extension parts 214. Parts of the second extension parts 214 between the first elastic support parts 220 and the second elastic support parts 240, as well as parts of the second extension parts 214 between the first elastic support parts 220 and their adjacent retaining pieces 202 (i.e., between the first elastic support parts 220 and the magnet group installation parts 2020), are designed as arcs 222. Parts of the first extension parts 213 between the first elastic support part 220 and the second elastic support parts 240, as well as parts of the first extension parts 213 between the first elastic support parts 220 and their adjacent connecting walls 201, are also designed as arcs 222. A radius of each arc 222 is equal to and greater than 0.5 mm (including 0.5 mm). By designing the arcs 222 and limiting the radius thereof, stress at the edge of the connection can be dispersed, preventing cracks due to the stress exceeding the material strength. In this embodiment, as shown in FIG. 1, FIG. 2 and FIG. 11, the magnet group installation parts 2020 are connected to actuating arms 400, the actuating arms are provided with output shafts 421, and the output shafts 421 are disposed on the installation frame 200. Each actuating arm 400 includes a fixing part 410 and an output shaft connection part 420. The fixing parts 410 are connected to the side walls 230 of the magnet group installation parts 2020, and the output shaft connection parts 420 are bent relative to the fixing parts 410 and disposed on the installation frame 200, with the output shafts 421 installed on the output shaft connection parts 420. The number of the output shafts 421 is determined based on the number of components that need to perform reciprocating linear motion. In this embodiment, each actuating arm 400 is provided with two output shafts 421. The two output shafts 421 on a same side are arranged at intervals along the direction perpendicular to the reciprocating motion of the magnet groups 300, i.e., a magnet group 300 drives two output shafts 421 for reciprocating linear motion, and two magnet groups 300 drive four output shafts 421 for reciprocating linear motion. For example, if the components that need to perform reciprocating linear motion are movable blades in a hair cutting device, four movable blades can be set up, which increases the cutting efficiency thereby resulting in cleaner shaving. In this embodiment, as shown in FIG. 1 and FIG. 2, the actuating arms 400 define positioning holes, and the magnet group installation parts 2020 are provided with positioning protrusions. When the actuating arms 400 are connected to the magnet group installation part 2020, the positioning protrusions are inserted into the positioning holes to position the actuating arms 400, facilitating the positioning and installation of the actuating arms 400. Free ends of the two actuating arms 400 in this embodiment are oppositely arranged.

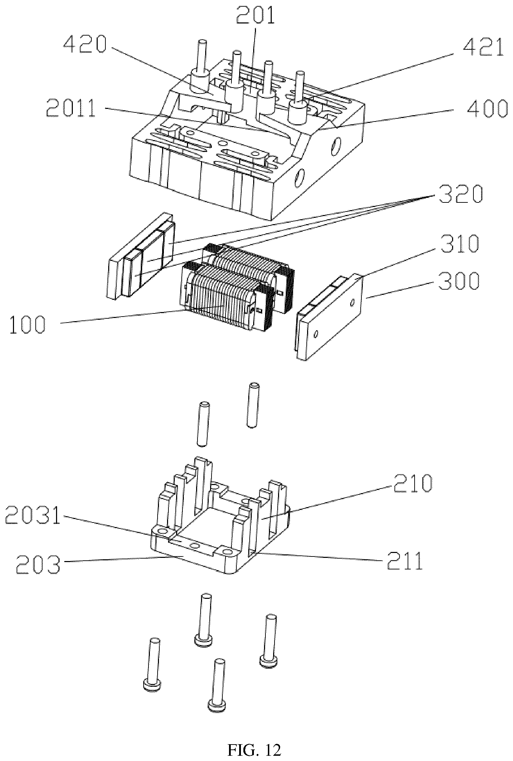

The invention also provides a second implementation of the installation frame 200, as shown in FIG. 12. The installation frame 200 in this embodiment is structurally similar to the first implementation described earlier, with the following difference. In this embodiment, the electromagnet installation part 2010 is formed independently and then assembled with the connecting walls 201 and the elastic connection parts into a single unit. Specifically, the electromagnet installation part 2010 includes two supporting walls 210 which are symmetrical and spaced apart, two sides of the two supporting walls 210 are connected by the side walls 203. A top surface 2031 of each side wall 203 is shaped like a concave or convex shape, and a bottom surface 2011 of each connecting wall 201 is adapted to the shape of the top surface 2031 of a corresponding side wall 203. For example, when the top surface 2031 of a side wall 203 is concave, the bottom surface 2011 of a corresponding connecting wall 201 is convex, and vice versa. When assembling the electromagnet installation part 2010 with the connecting walls 201, the supporting walls 210 of the electromagnet installation part 2010 are inserted between the two connecting walls 201, and the top surface 2031 of each side wall 203 abuts against the bottom surface 2011 of the corresponding connecting wall 201, and fasteners are used to secure the side walls 203 to the connecting walls 201 correspondingly, thereby connecting the electromagnet installation part 2010 to the connecting walls 201 and indirectly to the elastic connection parts. Additionally, unlike the first implementation mentioned above, the actuating arms 400 in this embodiment are formed integrally with the magnet group installation parts 2020, simplifying the production process and avoiding assembly errors. Specifically, the actuating arms 400 includes output shaft connection parts 420, which are directly integrated with the magnet group installation parts 2020.

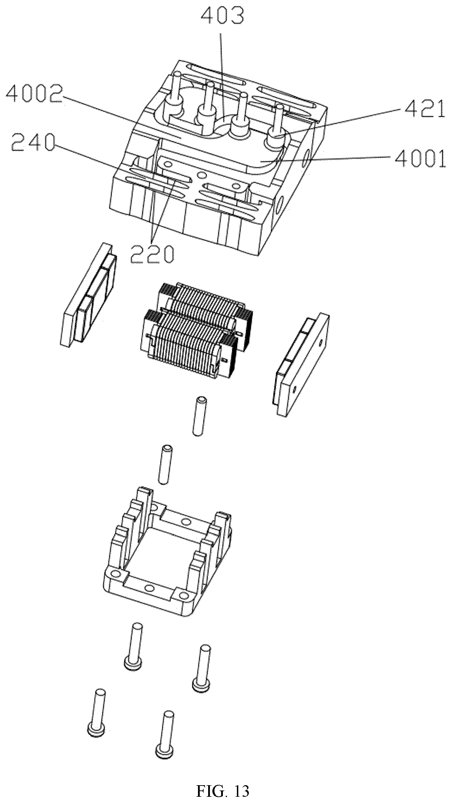

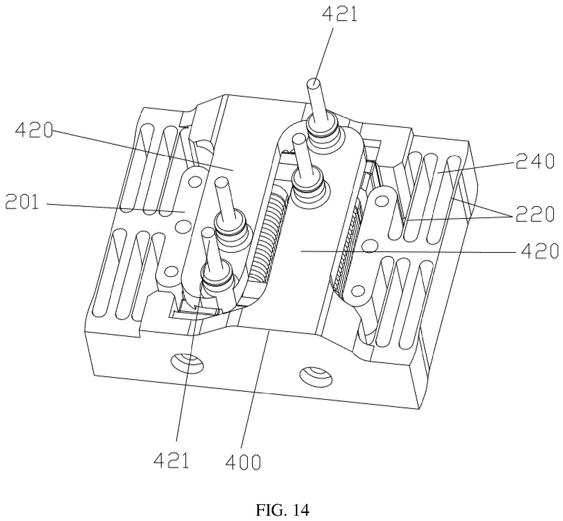

The invention further provides a third implementation of the installation frame 200, as shown in FIG. 13. This embodiment of the installation frame 200 is structurally similar to the second implementation described above, with the following difference. In this embodiment, the free ends of the two actuating arms 400 are arranged in a staggered manner. By arranging the two actuating arms 400 in a staggered state, better dynamic balance can be achieved, thereby reducing vibrations. Specifically, there are two specific implementations for the staggered arrangement of the free ends of the two actuating arms 400. A first implementation is shown in FIG. 14, the free ends of the two actuating arms 400 are arranged in a staggered manner. The second implementation is shown in FIG. 13, each output shaft connection part 420 of the actuating arms 400 includes a head 4001 and a neck 4002 which are connected to each other. The actuating arms 400 are integrally connected to the magnet group installation parts 2020 via the necks 4002. A size of the head 4001 is greater than a size of the neck 4002, and the connection between the head 4001 and the neck 4002 forms a concave arc 403. The concave arc 403 and the neck together define an accommodation groove. A part of the head 4001 of an actuating arm 400 extends into the accommodation groove of another actuating arm 400. Meanwhile, the output shafts 421 on the two actuating arms 400 are disposed on the heads 4001, and the output shafts 421 on the heads 4001 of the two actuating arms 400 are juxtaposed with each other, and thus the free ends of the two actuating arms 400 are in a staggered state.

In the second and third implementations mentioned above, the fixing plate 212 is not required.

The invention also provides a specific implementation of a hair cutting device, including a housing and movable blade assemblies. The structure of the movable blade assemblies is known in the related art. In this embodiment, four movable blade assemblies are used. The linear actuator is installed inside the housing. The movable blade assemblies are connected to the magnet groups 300 and reciprocate with the magnet groups 300 powered by the linear actuator. Specifically, the movable blade assemblies are connected to the output shafts 421 and connected to the magnet group installation parts 2020 via the actuating arms 400, allowing the movable blade assemblies to perform reciprocating linear motion for hair cutting. Since the hair cutting device adopts the linear actuator which is compact, a size of the hair cutting device can also be reduced, making the hair cutting device more portable and easier to store, thereby improving the aesthetics of the hair cutting device. In addition, since the hair cutting device includes the linear actuator, the hair cutting device also possesses all the beneficial technical effects of the linear actuator, which are not repeated here.

Although the embodiments of the invention have been shown and described above, it can be understood that the above embodiments are exemplary and should not be construed as limitations on the invention. Those skilled in the art may make changes, modifications, substitutions, and variations to the above embodiments within the scope of the invention.

## Claims

1. A linear actuator, comprising:
at least one electromagnet arranged horizontally, wherein each electromagnet comprises two magnetic poles, and the two magnetic poles are arranged at two ends of the electromagnet along an axial direction of the electromagnet; and
magnet groups disposed at two sides of the at least one electromagnet separately, wherein each magnet group is opposite to a corresponding one of the magnetic poles of the at least one electromagnet, each magnet group comprises at least two magnets, a side of a part of the at least two magnets facing the at least one electromagnet is S pole, and a side of another part of the at least two magnets facing the at least one electromagnet is N pole; after energizing the at least one electromagnet, the magnet groups are driven to reciprocate along a direction perpendicular to a central axis of the at least one electromagnet through magnetic induction action between the at least one electromagnet and the magnet groups.

2. The linear actuator as claimed in claim 1, wherein a number of the at least two magnets of each magnet group is one more than a number of the at least one electromagnet.

3. The linear actuator as claimed in any one of claims 1-2, wherein a number of the at least one electromagnet is two, the two electromagnets are juxtaposed with each other, after electrified, polarities of magnetic poles at same ends of the two electromagnets are opposite, a number of the at least two magnets is three, and polarities of the three magnets facing the two electromagnets alternate between S pole and N pole; or
a number of the at least one electromagnet is two, the two electromagnets are juxtaposed with each other, after electrified, polarities of magnetic poles at same ends of the two electromagnets are same, a number of the at least two magnets is three, and polarities of the three magnets facing the two electromagnets are arranged in units of S-pole-S-pole-N-pole, N-pole-S-pole-S-pole, S-pole-N-pole-N-pole, or N-pole-N-pole-S-pole.

4. The linear actuator as claimed in claim 2, wherein vertical lines perpendicular to surface centers of the at least two magnets and the central axis of the at least one electromagnet are arranged in a staggered manner, and the central axis of the at least one electromagnet is located between the vertical lines perpendicular to the surface centers of adjacent two of the at least two magnets.

5. The linear actuator as claimed in any one of claims 1-4, wherein a magnetic pole arrangement on the side of the at least two magnets in one of the magnet groups facing the at least one electromagnet is same as a magnetic pole arrangement on the side of the at least two magnets in another one of the magnet groups facing the at least one electromagnet; or
a magnetic pole arrangement on the side of the at least two magnets in one of the magnet groups facing the at least one electromagnet is opposite to a magnetic pole arrangement on the side of the at least two magnets in another one of the magnet groups facing the at least one electromagnet.

6. The linear actuator as claimed in claim 1, wherein the at least one electromagnet comprises a metal core and an insulator wrapped around the metal core, with a coil wound around the insulator, the metal core comprises a plurality of metal sheets, and the plurality of metal sheets are stacked to form the metal core.

7. The linear actuator as claimed in claim 1, further comprising: an installation frame; wherein the installation frame comprises an electromagnet installation part and magnet group installation parts disposed on two sides of the electromagnet installation part, the at least one electromagnet is horizontally disposed in the electromagnet installation part, the magnet groups are respectively disposed in the magnet group installation parts, and after the magnet groups are installed in the magnet group installation parts, each of the magnet groups is opposite to the corresponding one of the magnetic poles of the at least one electromagnet installed in the electromagnet installation part.

8. The linear actuator as claimed in claim 7, wherein the magnet group installation parts are elastically connected to the electromagnet installation part via elastic connection parts, and the elastic connection parts are integrally formed with the electromagnet installation part into one whole or detachably connected to the electromagnet installation part via fasteners; or
the magnet group installation parts are connected to actuating arms respectively, the actuating arms are provided with output shafts, the output shafts are disposed on the installation frame, and free ends of two of the actuating arms are arranged in a staggered manner or in an opposite manner.

9. The linear actuator as claimed in any one of claims 7-8, wherein two sides of the electromagnet installation part are provided with connecting walls respectively, the connecting walls are respectively provided with first extension parts, two sides of each of the magnet group installation parts are provided with second extension parts respectively, one of the first extension parts and one of the second extension parts on a same side as the one of the first extension parts extend in a same direction, and the one of the first extension parts and the one of the second extension parts on the same side as the one of the first extension parts are connected via the elastic connection part; and
each elastic connection part comprises two first elastic support parts and a second elastic support part, the second elastic support part is disposed between the two first elastic support parts, and a thickness of the second elastic support part is greater than a thickness of each of the two first elastic support parts at two sides of the second elastic support part.

10. A hair cutting device, comprising: a housing and movable blade assemblies; wherein an inside of the housing is provided with the linear actuator as claimed in any one of claims 1-9, the movable blade assemblies are connected to the magnet group installation parts, and the movable blade assemblies reciprocate with the magnet groups under power provided by the magnet groups of the linear actuator.
